# EUROPÄISCHE PATENTSCHRIFT

(11) **EP 2 177 063 B1**
(45) Veröffentlichungstag und Bekanntmachung des Hinweises auf die Patenterteilung: **19.08.2015**
(21) Anmeldenummer: 08759266.3
(22) Anmeldetag: 17.06.2008
(51) Int. Cl.: H04W 24/06

(54) **VERFAHREN ZUM TESTEN VON GERÄTEN FÜR EIN MOBILFUNKSYSTEM, SIGNALGENERATOR, GERÄT FÜR EIN MOBILFUNKSYSTEM UND MESSSYSTEM**
METHOD FOR TESTING APPLIANCES FOR A MOBILE RADIO SYSTEM, SIGNAL GENERATOR, APPLIANCE FOR A MOBILE RADIO SYSTEM, AND MEASUREMENT SYSTEM
PROCÉDÉ DE TEST D'APPAREILS D'UN SYSTÈME DE RADIOTÉLÉPHONIE MOBILE, GÉNÉRATEUR DE SIGNAUX, APPAREIL POUR SYSTÈME DE RADIOTÉLÉPHONIE MOBILE ET SYSTÈME DE MESURE

(30) Priorität: 14.08.2007 DE 102007038337
(43) Veröffentlichungstag der Anmeldung: 21.04.2010
(73) Patentinhaber: Rohde & Schwarz GmbH & Co. KG, 81671 München (DE)
(72) Erfinder: PAULY, Andreas, 81673 München (DE)
(74) Vertreter: Beder, Jens
(86) Internationale Anmeldenummer: PCT/EP2008/004869
(87) Internationale Veröffentlichungsnummer: WO 2009/021575

(56) Entgegenhaltungen:
- EP-A- 0 817 515
- WO-A-01/26259
- WO-A-2004/107653
- WO-A-2005/074173
- GB-A- 2 352 129
- US-A1- 2006 094 416
- US-A1- 2006 194 553

## Beschreibung

Die Erfindung betrifft ein Verfahren zum Testen von Geräten von Mobilfunksystemen, hierfür vorgesehene Geräte, einen Signalgenerator sowie ein Messsystem.

Beim Testen von Mobilfunksystemen wird üblicherweise ein sogenannter Protokolltester verwendet. Dieser Protokolltester kommuniziert über eine standardkonforme Funkverbindung mit einem Gerät des Mobilfunksystems, also einer Basisstation oder einem Mobilfunkgerät. Zum Testen wird eine solche standardkonforme Verbindung mit sogenannten Uplink- und Downlink-Signalen zwischen dem zu testenden Gerät und dem Protokolltester aufgebaut. Während eines frühen Entwicklungsstadiums ist eine Analyse eines zu testenden Geräts mittels eines Protokolltesters jedoch häufig noch nicht möglich, da noch nicht alle Funktionen die in dem jeweiligen Mobilfunkstandard vorgeschrieben sind implementiert sind. Überdies sind die Protokolltester hinsichtlich der Qualität eines gesendeten Hochfrequenzsignals einem Signalgenerator qualitativ unterlegen. In der Entwicklung von Geräten für Mobilfunksysteme ist es daher häufig wünschenswert, das Verhalten des zu testenden Geräts mittels eines Signalgenerators überprüfen zu können. Diese Tests umfassen Testzyklen, die an eine später in der Produktion beispielsweise durchzuführende Testschleife angepasst sind.

Beispielsweise bezieht sich die WO 2004/107653 A1 auf ein Verfahren und System zum Testen mobiler Endgeräte. Dabei werden Fehlerraten in up- bzw. downlink gemessen. Zur Analyse wird ein Testgerät verwendet, welches einen bitweisen Vergleich von Sendedaten mit Abschnitten der Empfangsdaten durchführt. Dabei werden Signale sowohl auf der Seite des zu testenden Gerätes als auch auf der Seite des Testgeräts durch entsprechende Demodulation ausgewertet, um den Vergleich der Bitsequenzen durchzuführen.

Die US 2006/0094416 A1 bezieht sich auf das Testen des Verhaltens von mobilen Endgeräten beim Wechsel der zugeordneten Funkzelle. Dabei werden Pegel und ihre zugehörigen Schwellwerte verglichen und ausgewertet.

Die WO 01/26259 A1 offenbart eine Vorrichtung und Verfahren für die Kalibrierung einer Leistungsausgabe einer mobilen Kommunikationsvorrichtung. Dabei beinhaltet ein Prüfschleifenmodul eine Vielzahl von Signalpfaden und ist ausgestaltet, um ein Telefonsignal mit einem Signal von einem Signalgenerator zu mischen, um ein Prüfschleifensignal zu erzeugen. Das Prüfschleifensignal wird dann von dem Telefon ausgewertet.

Ein Signalgenerator, mit dem ein einem ausgewählten Mobilfunkstandard entsprechendes Hochfrequenzsignal erzeugt und gesendet werden kann, ist beispielsweise aus der DE 101 24 371 bekannt. Der Signalgenerator kann ein standardkonformes Hochfrequenzsignal erzeugen und über eine Funkstrecke zu einem zu testenden Gerät übertragen, allerdings wird zwischen dem Signalgenerator und dem zu testenden Gerät kein Rückkanal aufgebaut. Der Signalgenerator weist hierzu einen Signalerzeugungsabschnitt, einen Sendeabschnitt und einen Steuerungsabschnitt auf. Mittels des Sendeabschnitts wird ein Signal, das in dem Signalerzeugungsabschnitt erzeugt wird, gesendet. Die Erzeugung des Signals einschließlich der dem zu erzeugenden und zu sendenden Signal zugrundeliegenden Signaldaten wird dabei durch einen Steuerungsabschnitt des Signalgenerators gesteuert.

Damit ist es zwar möglich, ein qualitativ hochwertiges Sendesignal zu erzeugen, die Verwendung eines Signalgenerators hat andererseits jedoch den Nachteil, dass eine entsprechende Empfangseinrichtung zum Verarbeiten des von dem zu testenden Gerät über einen Rückkanal gesendeten, ebenfalls zu einem Mobilfunkstandard konformen Antwortsignals nicht vorhanden ist.

Der Erfindung liegt die Aufgabe zugrunde, ein Messsystem, einen entsprechenden Signalgenerator und ein Gerät für ein Mobilfunksystem sowie ein Verfahren zum Testen eines Geräts für ein Mobilfunksystem zu schaffen, bei dem eine Messung von Eigenschaften eines Geräts des Mobilfunksystems durchgeführt werden kann, ohne dass der zur Messung eingesetzte Signalgenerator eine Empfangseinrichtung zur standardkonformen Verarbeitung des von dem zu testenden Gerät im Uplink bzw. Downlink zurückgesendeten Antwortsignals benötigt.

Die Aufgabe wird durch das erfindungsgemäße Verfahren mit den Merkmalen des Anspruchs 1, den erfindungsgemäßen Signalgenerator mit den Merkmalen des Anspruchs 9, das Gerät für ein Mobilfunksystem mit den Merkmalen des Anspruchs 13 sowie das Messsystem nach Anspruch 16 gelöst.

Erfindungsgemäß wird zum Testen von Geräten eines Mobilfunksystems ein Signalgenerator verwendet. Der Signalgenerator weist einen Signalerzeugungsabschnitt zum Erzeugen eines einem Mobilfunkstandard entsprechenden Signals aus dem Signal zugrundeliegenden Signaldaten auf. Ferner weist der Signalgenerator einen Sendeabschnitt zum Senden des erzeugten Signals und einen Steuerungsabschnitt zum Ansteuern des Signalerzeugungsabschnitts und/oder des Sendeabschnitts auf. Ferner weist der Signalgenerator einen Korrelator auf, wobei dem Korrelator ein Vergleichssignal und ein Messsignal zum Vergleich zuführbar sind, wobei zumindest ein Vergleichssignal und eine diesem Vergleichssignal zugeordnete Änderungsvorschrift in einem Speicher des Signalgenerators abgespeichert sind und der Steuerungsabschnitt so eingerichtet ist, dass bei Übereinstimmung des Messsignals mit einem Vergleichssignal der Signalerzeugungsabschnitt und/oder der Sendeabschnitt der Änderungsvorschrift entsprechend angesteuert wird, wobei der Signalerzeugungsabschnitt entsprechend der Änderungsvorschrift Folgesignale erzeugt und diese von dem Sendeabschnitt gesendet werden.

Das Gerät für ein Mobilfunksystem weist ein Sende- und ein Empfangsmodul zum Empfangen eines Messsignals und eine mit dem Sendemodul und Empfangsmodul verbundene Signalverarbeitungseinheit auf, wobei die Signalverarbeitungseinheit eine Auswerteeinheit aufweist, in der das empfangene Messsignal ausgewertet wird, wobei in Abhängigkeit von dem Ergebnis der Auswertung ein Antwortsignalerzeugungsabschnitt der Signalverarbeitungseinheit ein Antwortsignal erzeugt, wobei der Antwortsignalerzeugungsabschnitt so eingerichtet ist, dass das von dem Gerät gesendete Antwortsignal eine standardkonforme Einhüllende oder, standardunabhängig, einen zur Übermittlung einer Information charakteristischen Verlauf der Einhüllenden aufweist.

Zur Durchführung des erfindungsgemäßen Verfahrens werden zunächst Signaldaten erzeugt. Aus diesen Signaldaten wird durch den Signalgenerator ein zu sendendes Signal erzeugt und an das zu testende Gerät gesendet. Dieses Signal wird von dem zu testenden Gerät empfangen und durch dessen Auswerteeinheit ausgewertet. Auf Basis des ausgewerteten Signals wird ein Antwortsignal erzeugt. Das Antwortsignal enthält eine Information, die z.B. das korrekte Empfangen und Auswerten des Signals oder eine geforderte Leistungseinstellung zurückgesendet. Das Antwortsignal weist eine für die zurückzusendende Information charakteristischen Einhüllende auf. Diese charakteristische Einhüllende wird abgetastet und ein die Einhüllende repräsentierendes Messsignal erzeugt. In dem Signalgenerator wird das Messsignal mit zumindest einem Vergleichssignal verglichen. Weiterhin ist jedem Messsignal eine Änderungsvorschrift zugeordnet. Nachfolgend wird die Änderungsvorschrift eingelesen und daraufhin Folgesignale erzeugt und/oder gesendet in Abhängigkeit von der Auswertung der Änderungsvorschrift.

Eine solche Messung einer charakteristischen Einhüllenden des Antwortsignals ermöglicht es somit, durch den Signalgenerator eine messbare Größe wie die Einhüllende des Antwortsignals bzw. das daraus gewonnene Messsignal zu verarbeiten. Eine standardkonforme Auswertung des Antwortsignals ist daher nicht erforderlich. Ein Empfangsabschnitt zum Empfangen und Demodulieren des über einen Rückkanal zurückgesendeten Antwortsignals ist daher seitens des Signalgenerators nicht erforderlich.

So kann beispielsweise das korrekte Empfangen eines Datenpakets durch das zu testende Gerät ermittelt und infolgedessen durch das Gerät als Antwortsignal ein positives Bestätigungssignal über den korrekten Empfang der Information gesendet werden. Wird dagegen die Information nicht korrekt übertragen und ausgewertet, so wird ein negatives Bestätigungssignal als Antwortsignal übermittelt. Anstelle der Auswertung dieser zurückgesendeten Bestätigungssignale, wie sie der Standard vorsieht, wird nun lediglich die für ein positives oder negatives Bestätigungssignal charakteristische Einhüllende des Antwortsignals gemessen. Die möglichen charakteristischen Verläufe der Einhüllenden des Antwortsignals sind dabei begrenzt. Sie sind in dem Signalgenerator in Form jeweils eines Vergleichssignals gespeichert. Folglich genügt die Messung der Einhüllenden des Antwortsignals, um die in dem Antwortsignal enthaltene Information durch Vergleich mit den abgespeicherten Vergleichssignalen zu ermitteln. Damit können verschiedene Funktionen eines zu testenden Geräts, beispielsweise einer Basisstation oder einem Mobilfunkgerät, durch einen Signalgenerator getestet werden, der ein qualitativ hochwertiges Signal zur Verfügung stellt. Der verwendete Signalgenerator muss lediglich einen Sendeabschnitt und eine Möglichkeit Abtasten der Einhüllenden des Antwortsignals aufweisen.

Besonders einfach ist das erfindungsgemäße Verfahren auszuführen, wenn der Standard, für den das zu testende Gerät getestet werden soll ohnehin charakteristische Einhüllende aufweist. Solche Standards sind beispielsweise 3GPP HSPA (3rd Generation Partnership Project High Speed Packet Access), WiMAX (Worldwide Interoperability for Microwave Access) oder EUTRA/LTE (Evolved-UMTS-Terrestrial-Radio-Access/Long Term Evolution).

In den Unteransprüchen sind vorteilhafte Weiterbildungen des erfindungsgemäßen Verfahrens, des Signalgenerators und des Geräts für ein Mobilfunksystem angegeben.

Bei Übereinstimmung des Messsignals mit einem Vergleichssignal werden für nachfolgend in einem Testzyklus zu sendende Signale die Erzeugung und/oder das Senden des Signals unter Berücksichtigung der Änderungsvorschrift durchgeführt. Durch diese Änderungsvorschriften kann eine Änderung des zu sendenden Signals seitens des Signalgenerators erfolgen. Damit wird durch die Messung der Einhüllenden des Antwortsignals und dem anschließenden Vergleich des daraus gewonnenen Messsignals mit den Vergleichssignalen bestimmt, in welcher Weise das nachfolgend in dem Testzyklus zu sendende Signal bzw. dessen Sendeparameter geändert zu ändern sind. Ein Testzyklus enthält eine Mehrzahl von nacheinander gesendeten Signalen, wobei die Auswertung der auf Grund der ausgewerteten Signale eine Messung beispielsweise von Fehlerraten des zu testenden Geräts ermöglicht. Zu ändernde Sendeparameter können beispielsweise die Leistung des durch den Signalgenerator zu sendenden Signals sein. Andererseits ist es auch möglich, eine redundante Version des zuvor gesendeten Signals an das Gerät für ein Mobilfunksystem zu senden. Dies geschieht beispielsweise bei einer fehlerhaften Auswertung des zuvor gesendeten Signals durch das zu testende Gerät und die dem entsprechende Rücksendung eines negativen Bestätigungssignals. Der Signalgenerator sendet somit nachfolgend ein Signal an das zu testende Gerät, welche einer Spezifikation (z.B. mit Angabe einer zu sendenden Redundanzversion) genügt. Trotzdem benötigt der Signalgenerator kein Empfangsmodul, das eine standardkonforme Verarbeitung des zurückgesendeten Antwortsignals erlaubt.

In dem Signalgenerator ist ein Speicher vorgesehen, in dem Vergleichssignale sowie den Vergleichssignalen zugeordnete Änderungsvorschriften abgelegt sind. Ein Steuerungsabschnitt des Signalgenerators ist so eingerichtet, dass bei Übereinstimmung des Messsignals mit einem der Vergleichssignale der Signalerzeugungsabschnitt und/oder der Sendeabschnitt durch den Steuerungsabschnitt der Änderungsvorschrift entsprechend angesteuert wird.

Insbesondere ist es bevorzugt, wenn ein einem Vergleichssignal entsprechendes Antwortsignal durch das zu testende Gerät als Muster erzeugt wird. Auf Grund einer gezielten Messung dieses Antwortsignals wird ein Messsignal erzeugt, das als Vergleichsignal in dem Speicher des Signalgenerators abgespeichert wird. Damit sind nicht a priori sämtliche Vergleichssignale in dem Signalgenerator abzuspeichern. Vielmehr kann beispielsweise bei Initialisierung eines Testzyklus jedes in dem Test mögliche Antwortsignal zunächst durch das zu testende Gerät erzeugt und somit ein Muster gesendet werden. Die aufgrund dieser gemessenen Antwortsignale erzeugten Messsignale werden dann jeweils als Vergleichssignal in dem Signalgenerator gespeichert. Somit "lernt" der Signalgenerator zu Beginn eines Messvorgangs die Vergleichssignale durch Messung des tatsächlich durch das zu testende Gerät gesendeten charakteristischen Einhüllenden der realen Antwortsignale kennen. Während der Durchführung einer weiteren Messung des Testzyklus wird dann jeweils ein das Antwortsignal repräsentierendes Messsignal mit den zuvor abgespeicherten Vergleichssignalen auf Übereinstimmung überprüft. Die Überprüfung der Übereinstimmung erfolgt dabei durch einen Vergleich der Vergleichssignale mit dem aus dem jeweiligen Antwortsignal erzeugten Messsignal in Form einer Mustererkennung in einem Korrelator.

Zur Messung der Einhüllenden kann z.B. ein Messkopf mit dem Signalgenerator verbunden sein. Um eine zeitrichtige Zuordnung des Messsignals und so letztlich des Antwortsignals zu einem zuvor gesendeten Signal zu ermöglichen, wird bevorzugt der Messkopf, der mit dem Signalgenerator zur Messung der charakteristischen Einhüllenden verbunden ist, zeitlich gesteuert ausgelesen.

Das zeitlich in Bezug auf das gesendete Signal koordinierte Auslesen des Eingangsanschlusses und somit des Einlesens des zugeführten Messsignals erfolgt durch den Steuerungsabschnitt.

Vorzugsweise wird zu Beginn eines Testzyklus ein den Testzyklus einleitendes Signal durch den Signalgenerator an das zu testende Gerät gesendet. Hierzu ist es bevorzugt, dass der Signalgenerator neben den zur Durchführung der eigentlichen Messung bestimmten Signalen zumindest ein sich hiervon unterscheidendes zweites Signal erzeugen kann. In dem zu testenden Gerät ist ein Signalinterpreter vorhanden, der dieses sich von den weiteren Signalen unterscheidende Signal erkennt und so den Beginn eines Testzyklus detektiert.

Das zu testende Gerät ist vorzugsweise so eingerichtet, dass auch dann ein Antwortsignal mit einer charakteristischen Einhüllenden erzeugt werden, wenn das durch den Signalgenerator gesendete Signal zu einem Mobilfunkstandard gehört, der für das Antwortsignal eine konstante Einhüllende vorsieht. Das Gerät für das Mobilfunksystem, welches in dem erfindungsgemäßen Messsystem getestet wird, weist hierzu in einer Auswerteeinheit ein Antworterzeugungsabschnitt auf, der so eingerichtet ist, dass das von dem Gerät zurückgesendete Antwortsignal in einem ersten Modus eine konstante Einhüllende oder in einem zweiten Modus eine zur Übermittelung einer Information charakteristisch sich ändernde Einhüllende aufweist. Im Fall, dass also durch das Gerät für ein Mobilfunksystem standardkonform ein Antwortsignal durch den Antwortsignalerzeugungsabschnitt mit einer konstanten Einhüllenden erzeugt wird, ist der Antwortsignalerzeugungsabschnitt des erfindungsgemäßen Geräts in der Lage, alternativ eine sich charakteristisch ändernde Einhüllende des Antwortsignals zu erzeugen. Damit ist der Antwortsignalerzeugungsabschnitt so eingerichtet,
dass er abweichend von dem eigentlich zugrundeliegenden Mobilfunkstandard ein Antwortsignal erzeugen kann.

Dabei ist es besonders bevorzugt, dass die Auswerteeinheit einen Signalinterpreter aufweist, mit dem sich ein entsprechender Umschaltbefehl erkennen lässt. Mit Hilfe eines solchen Umschaltbefehls bzw. eines Signals zum Start eines Testzyklus lässt sich dann der Antwortsignalerzeugungsabschnitt aus seinem regulären Modus, in dem standardkonform ein Antwortsignal erzeugt wird, in einen Testmodus umschalten, bei dem die Einhüllende einen für die zu übertragende Information charakteristischen Verlauf aufweist.

Das Messystem zum Testen von Geräten für Mobilfunksysteme umfasst dabei den Signalgenerator gemäß der vorliegenden Erfindung, das zu testende Gerät sowie eine Messvorrichtung zum Erzeugen eines Messsignals, wobei der Korrelator im Signalgenerator zum Vergleichen des Messsignals mit einem Vergleichssignal bereitgestellt ist.

Die Erfindung wird in der Zeichnung anhand eines bevorzugten Ausführungsbeispiels näher erläutert. Es zeigen:
- Fig. 1: eine schematische Darstellung der Kommunikation in einem Mobilfunksystem;
- Fig. 2: ein Blockschaltbild eines erfindungsgemäßen Messsystems zur Erläuterung des erfindungsgemäßen Verfahrens sowie des Signalgenerators und des Geräts für ein Mobilfunksystem;
- Fig. 3: eine schematische Darstellung zum zeitlichen Ablauf der Datenübertragung zwischen einem Signalgenerator und dem zu testenden Gerät für ein Mobilfunksystem; und
- Fig. 4: ein Diagramm zur Erläuterung der Durchführung des erfindungsgemäßen Verfahrens.

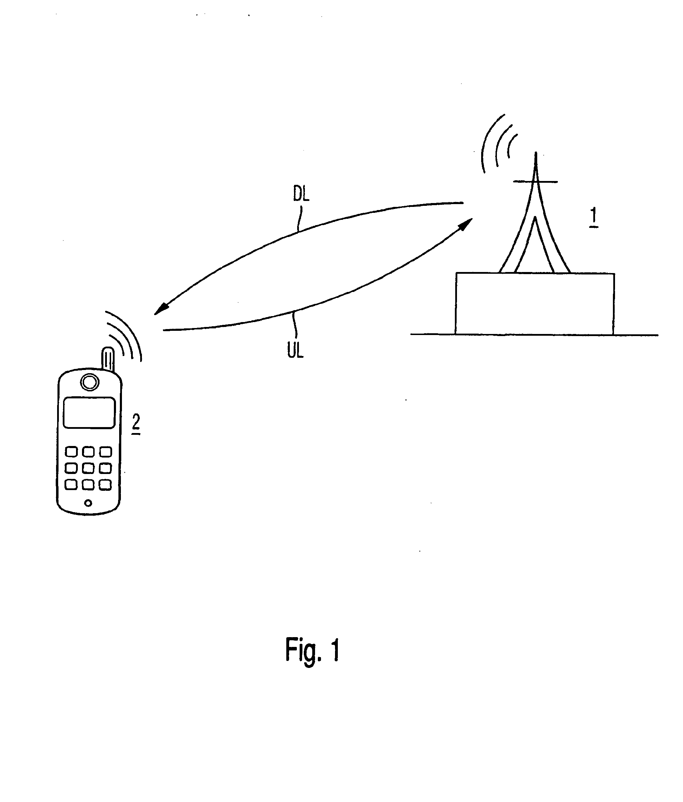

In der Fig. 1 ist schematisch und stark vereinfacht eine Verbindung zwischen einer Basisstation 1 und einem Mobilfunkgerät 2 dargestellt. Die Funkverbindung zwischen der Antenne der Basisstation 1 und der Antenne des Mobilfunkgeräts 2 weist eine erste Übertragungsrichtung ("Downlink") von der Basisstation 1 zu dem Mobilfunkgerät 2 und eine in entgegengesetzte Richtung gerichtete zweite Übertragungsrichtung ("Uplink") von dem Mobilfunkgerät 2 zu der Basisstation 1 auf. Dabei werden nicht nur die eigentlichen Nutzdaten über die Funkverbindung zwischen der Basisstation 1 und dem Mobilfunkgerät 2 übertragen, sondern auch Informationen über die Verbindungsqualität, die einzustellende Sendeleistung sowie den korrekten oder nicht korrekten Empfang von Daten. So wird beispielsweise bei der Verwendung von paketweiser Übertragung von Nutzdaten eine Prüfgröße mit den Daten zusammen übertragen. Das empfangende Gerät, also entweder die Basisstation 1 oder das Mobilfunkgerät 2, kann anhand dieser Prüfgröße ermitteln, ob die empfangenen Daten korrekt übertragen wurden. Werden die Daten korrekt übertragen, so wird ein positives Bestätigungssignal ("ACK") zurückgesendet. War die Übertragung bzw. die Auswertung dagegen fehlerhaft, so wird ein negatives Bestätigungssignal ("NACK") zurückgesendet. Als Folge eines negativen Bestätigungssignals besteht dann, je nach verwendetem Kommunikationsstandard, die Möglichkeit das nicht korrekt übertragene Datenpaket noch einmal, beispielsweise in redundanter Form zu senden. War die Übertragung und Auswertung dagegen erfolgreich, so wird ein "ACK"-Bestätigungssignal zurückgesendet. In Folge dessen können in dem nachfolgenden Datenpaket neue Nutzdaten gesendet werden.

In ähnlicher Weise kann durch das empfangende Gerät ermittelt werden, ob die Sendeleistung des Kommunikationspartners ausreichend groß ist. Ist beispielsweise wegen zunehmender Entfernung oder der Dämpfungseigenschaften der Funkstrecke die Sendeleistung nicht ausreichend, um eine zuverlässige Übertragung von Daten zu ermöglichen, so wird in dem zurückgesendeten Antwortsignal angegeben, dass die Leistung z. B. um eine Leistungsstufe erhöht werden muss.

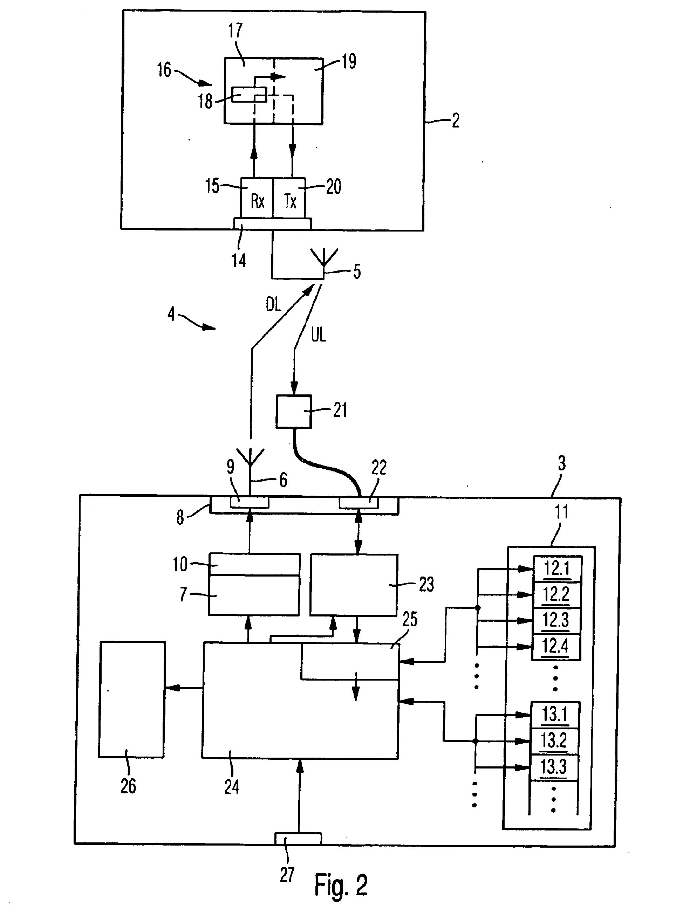

Zur Messung des Verhaltens eines Geräts für ein Mobilfunksystem können, wie es einleitend bereits ausgeführt wurde, sogenannte Protokolltester verwendet werden. Protokolltester bauen mit dem zu testenden Gerät eine dem Standard entsprechende Funkverbindung mit Uplink und Downlink auf. Die Erzeugung von zu sendenden Signalen, die einem Mobilfunkstandard entsprechen, ist jedoch auch mit einem Signalgenerator möglich, der keine Empfangsvorrichtung zum Empfang des über den Rückkanal des Geräts standardkonform gesendeten Antwortsignals aufweist. Erfindungsgemäß wird, wie dies nachfolgend unter Bezugnahme auf die Fig. 2 näher erläutert wird, daher das im Rückkanal gesendete Antwortsignal des zu testenden Geräts nicht durch eine standardkonforme Empfangseinrichtung ausgewertet, sondern eine für die zu übermittelnde Information charakteristische Einhüllende abgetastet.

Das in Fig. 2 dargestellte Messsystem gemäß der vorliegenden Erfindung umfasst neben dem zu testenden Gerät, welches lediglich beispielhaft das Mobilfunkgerät 2 ist, einen Signalgenerator 3. Der Signalgenerator 3 und das Mobilfunkgerät 2 kommunizieren über eine Funkverbindung 4 miteinander. Das Mobilfunkgerät 2 weist hierzu eine erste Antenne 5 auf. Entsprechend weist der Signalgenerator 3 eine zweite Antenne 6 auf. Ein von dem Signalgenerator 3 erzeugtes Signal wird über die zweite Antenne 6 gesendet und durch die erste Antenne 5 des Mobilfunkgeräts 2 empfangen.

Zur Signalerzeugung weist der Signalgenerator 3 einen Signalerzeugungsabschnitt 7 auf, in dem Signaldaten erzeugt oder aufgerufen werden. Aus den Signaldaten wird ein Signal erzeugt und einem Sendeabschnitt 10 zugeführt, der mit einer Ein-/Ausgangsbaugruppe 8 verbunden ist. Die Ein-/Ausgangsbaugruppe 8 umfasst einen Ausgangsanschluss 9, der mit der zweiten Antenne 6 verbunden ist.

Der Signalerzeugungsabschnitt 7 ist so eingerichtet, dass Signaldaten unmittelbar durch den Signalerzeugungsabschnitt 7 erzeugt werden können. Alternativ kann der Signalerzeugungsabschnitt 7 einen Datensatz mit Signaldaten aus einem Speicher 11 aufrufen. In dem Speicher 11 sind z.B. mehrere redundante Datensätze gespeichert. Wird in Reaktion auf ein gesendetes Signal ein negatives Bestätigungssignal ("NACK") erkannt, also die Information, dass die zuvor gesendeten Daten durch das Mobilfunkgerät 2 nicht korrekt empfangen und ausgewertet wurden, kann damit durch den Signalerzeugungsabschnitt 7 ein redundanter Datensatz aufgerufen und in einem nachfolgenden Signal an das Mobilfunkgerät 2 gesendet werden.

Das Mobilfunkgerät 2 weist einen Antennenanschluss 14 auf, der mit der ersten Antenne 5 verbunden ist. Von einem Empfangsmodul 15 wird das empfangene Signal an eine Signalverarbeitungseinheit 16 weitergeleitet. Die Signalverarbeitungseinheit 16 weist eine Auswerteeinheit 17 auf. In der Auswerteeinheit 17 wird das empfangene Signal ausgewertet und demoduliert und z. B. auch die Übereinstimmung zwischen einer Prüfsumme und den ermittelten Daten aus dem empfangenen Signal überprüft. In Abhängigkeit von dem Ergebnis dieser Auswertung wird ein Antwortsignal durch einen Antwortsignalerzeugungsabschnitt 19 der Signalverarbeitungseinheit 16 erzeugt. Dieses Antwortsignal wird über ein Sendemodul 20 der ersten Antenne 5 zugeführt und gesendet.

Zur weiteren Erläuterung sei zunächst davon ausgegangen, dass das Antwortsignal, das in dem Antwortsignalerzeugungsabschnitt 19 in Reaktion auf die Auswertung des empfangenen Signals erzeugt wird, eine nicht konstante Einhüllende aufweist und in dem Antwortsignal eine Information über den korrekten Empfang des von dem Signalgenerator 3 gesendeten Signals enthalten ist. Dies ist beispielsweise der Fall, wenn der Mobilfunkstandard, nach dem das zu testende Gerät kommuniziert, ein Antwortsignal mit einer solchen charakteristischen Einhüllenden vorschreibt. Hierzu werden, wie es bereits erläutert wurde, Bestätigungssignale verwendet. Ein positives Bestätigungssignal wird als "ACK" und ein negatives Bestätigungssignal als "NACK" bezeichnet und unterscheidet sich charakteristisch hinsichtlich der Einhüllenden des gesendeten Antwortsignals. Aufgrund der charakteristischen Einhüllenden des Antwortsignals kann zur Unterscheidung der Bestätigungssignale eine Leistungsmessung erfolgen. Somit kann durch eine Leistungsmessung und ohne beispielsweise eine Demodulation des Antwortsignals auf der Seite des Signalgenerators durchführen zu müssen der relevante Inhalt des Antwortsignals ermittelt werden.

Die Darstellung anhand eines sogenannten HARQ-Prozesses ("hybrid automatic repeat request") ist lediglich beispielhaft gewählt. Ebenso können andere Informationen in dem Antwortsignal enthalten sein. Als weiteres Beispiel ist eine Leistungseinstellung der Sendeleistung des jeweils verbundenen Geräts zu nennen.

Da der Signalgenerator keine Empfangseinrichtung aufweist, die eine standardkonforme Analyse und Bearbeitung des Antwortsignals zulässt, wird das von dem Mobilfunkgerät 2 gesendete Antwortsignal hinsichtlich seiner charakteristischen Einhüllenden ausgewertet. Zum Abtasten der Einhüllenden ist eine Messvorrichtung 21 vorgesehen. Die Messvorrichtung 21 ist ein Leistungsmesskopf, der über ein Verbindungskabel mit einem Eingangsanschluss 22 der Ein-/Ausgabeeinheit 8 des Signalgenerators 3 verbunden ist. Durch die Messvorrichtung 21 wird ein Messsignal erzeugt, welches repräsentativ für die gemessene Einhüllende ist. Dieses Messsignal wird über den Eingangsanschluss 22 dem Signalgenerator 3 zugeführt und von der Ausleseeinheit 23 ausgelesen. Da die Antwortsignale in einem bestimmten zeitlichen Zusammenhang mit dem ursprünglich gesendeten und ein Datenpaket beinhaltenden Signal stehen, erfolgt das Auslesen des Eingangsanschlusses 22 zeitlich gesteuert. Die zeitliche Steuerung erfolgt mittels eines Steuerungsabschnitts 24, der den Sendeabschnitt für die Aussendung des Signals und die Ausleseeinheit 23 zeitrichtig ansteuert. Als zeitrichtige Ansteuerung wird die Einhaltung eines Zeitversatzes zwischen der Aussendung eines Datenpakets und dem Eintreffen der hierzu korrespondierenden Antwort verstanden. Somit kann eine getriggerte Messung der Einhüllenden des Antwortsignals durch die Messvorrichtung 21 erfolgen, die eine Zuordnung der aus dem Antwortsignal gewonnenen Information zu einem bestimmten gesendeten Signal bzw. dem Signal zu Grunde liegenden Datenpaket erlaubt.

Die Ausleseeinheit 23 ist mit einem Korrelator 25 des Steuerungsabschnitts 24 verbunden. Der Verlauf des Messsignals wird von der Ausleseeinheit 23 dem Korrelator 25 zugeführt. Der Korrelator 25 ist ferner mit dem Speicher 11 verbunden. In dem Speicher 11 sind mehrere Vergleichssignale 12.1.... 12.4 abgespeichert. Der Korrelator 25 untersucht nun den Verlauf des Messsignals im Hinblick auf eine Übereinstimmung mit einem der Vergleichssignale 12.i. Die Vergleichssignale 12.i entsprechen den möglichen Verläufen der Leistung eines Antwortsignals. Damit kann die zu übermittelnde Information des Antwortsignals durch einen Vergleich des gemessenen Verlaufs der Einhüllenden mit den Vergleichssignalen 12.i, die in dem Speicher 11 abgespeichert sind, erfolgen. Von dem Korrelator 25 wird das Ergebnis des Vergleichs dem Steuerungsabschnitt 24 übermittelt. Der Steuerungsabschnitt 24 ermittelt bei Übereinstimmung mit einem der Vergleichssignale 12.i eine zugeordnete Änderungsvorschrift 13.i, welche ebenfalls in dem Speicher abgelegt ist. Bei dem zuvor beschriebnen Beispiel, bei dem ein HARQ-Prozess oder eine Abfolge von aufeinanderfolgenden HARQ-Prozessen überprüft wird, sind lediglich zwei unterschiedliche Vergleichssignale 12.1 und 12.2 in dem Speicher 11 abgelegt. Dementsprechend sind auch zwei Änderungsvorschriften 13.1 und 13.2 in dem Speicher 11 abgelegt. Die Darstellung weiterer Vergleichssignale 12.i und weiterer Änderungsvorschriften 13.i soll lediglich illustrieren, dass auch andere Informationen aus einem charakteristischen Leistungsverlauf des Antwortsignals mittels der Messvorrichtung 21 ermittelt werden können.

Sind die Daten korrekt empfangen worden und wird somit in dem Antwortsignal ein positives Bestätigungssignal "ACK" übermittelt, so wird durch den Korrelator 25 z. B. eine Übereinstimmung mit dem ersten Vergleichssignal 12.1 festgestellt. Durch den Steuerungsabschnitt 24 wird die dem ersten Vergleichssignal 12.1 zugeordnete Änderungsvorschrift 13.1 eingelesen. Im Falle eines positiven Bestätigungssignals "ACK" gibt die Änderungsvorschrift 13.1 an, dass in einem Signal neue Signaldaten an das Mobilfunkgerät 2 gesendet werden können. Der Steuerungsabschnitt 24 steuert daher den Signalerzeugungsabschnitt 7 so an, dass neue Signaldaten zur Übermittelung an das Mobilfunkgerät 2 erzeugt oder aus dem Speicher 11 eingelesen werden.

Enthielt das Antwortsignal dagegen ein negatives Bestätigungssignal "NACK", so wird durch den Korrelator 25 eine Übereinstimmung mit dem zweiten Vergleichssignal 12.2 festgestellt. Die anschließende Zuordnung der zweiten Änderungsvorschrift 13.2 führt dazu, dass der Steuerungsabschnitt 24 den Signalerzeugungsabschnitt 7 so ansteuert, dass dieselben Nutzdaten z. B. in redundanter Form an das Mobilfunkgerät 2 gesendet werden. Die Änderungsvorschrift kann auch für mehrere aufeinanderfolgende Übereinstimmungen von gemessenen Leistungsverläufen mit einem bestimmten Vergleichssignal komplexere Änderungen umfassen. So kann z.B. bei mehreren aufeinanderfolgenden Übereinstimmungen mit negativen Bestätigungssignalen "NACK" jeweils eine andere Redundanzversion gesendet werden ("incremental redundancy").

Bei dem beschriebenen Testzyklus wird durch aufeinanderfolgendes Senden von Nutzdaten und Ermitteln eines Anteils fehlerhaft empfangener Signale eine Fehlerrate bestimmt. Hierzu wird der Anteil von "ACK"- und "NACK"-Bestätigungssignalen ausgewertet.

Es ist leicht ersichtlich, dass im Fall der Information über eine Leistungseinstellung in dem Antwortsignal durch den Steuerungsabschnitt 24 der Sendeabschnitt 10 angesteuert wird. Die durch den Korrelator 25 festgestellten Übereinstimmungen zwischen dem gemessenen Messsignal und dem jeweiligen Vergleichssignal 12.i werden von dem Steuerungsabschnitt 24 einem Analyseabschnitt 26 übermittelt. Dort kann beispielsweise die Anzahl der im Antwortsignal enthaltenen "ACK" bzw. "NACK"-Signale ausgewertet werden und damit eine Blockfehlerrate bestimmt werden.

Die vorangegangenen Ausführungen gehen davon aus, dass das Antwortsignal jeweils eine bezüglich der zu übermittelnden Informationen charakteristische Einhüllende aufweist. Grundsätzlich ist das Verfahren sowie der entsprechende Signalgenerator 3 jedoch auch bei solchen Mobilfunkstandards einsetzbar, bei dem eine konstante Einhüllende des Antwortsignals vorgesehen ist oder wo sich die Einhüllenden so wenig voneinander unterscheiden, dass sie nicht als charakteristisch für die zu übertragende Information angesehen werden können. Es erfolgt dann der Betrieb des zu testenden Geräts in einem Testmodus, der anstelle des standardkonformen Antwortsignals ein alternatives Antwortsignal erzeugt, dessen Einhüllende wiederum charakteristisch für die zu übermittelnde Information ist.

Das zu testende Gerät, im dargestellten Beispiel also das Mobilfunkgerät 2, weist einen Signalinterpreter 18 auf, der in der Signalverarbeitungseinheit 16 vorgesehen ist. Mit diesem Signalinterpreter 18 wird aus einem bei Beginn eines Testzyklus gesendeten ersten Signal der Beginn des Testzyklus erkannt. Der Antwortsignalerzeugungsabschnitt 19 ist dabei so eingerichtet, dass er sowohl standardkonform ein Antwortsignal mit einer konstanten Einhüllenden als auch abweichend vom Standard ein Antwortsignal mit einer nicht-konstanten, jedoch für die zu übertragende Information charakteristischen Einhüllenden erzeugen kann. Zwischen diesen beiden Modi wird in Abhängigkeit vom Ergebnis des Signalinterpreters 18 umgeschaltet werden.

Wird also durch den Signalinterpreter 18 ein von dem Signalgenerator 3 gesendetes Signal als Beginn eines Testzyklus erkannt, so wird der Antwortsignalerzeugungsabschnitt 19 in seinen Testmodus umgeschaltet, in dem er abweichend von dem im Standard vorgeschriebenen Antwortsignal eine nicht-konstante, charakteristische Einhüllende des Antwortsignals erzeugt. Zum Zurückbringen des Antwortsignalerzeugungsabschnitts 19 in seinen normalen Betriebsmodus wird vorzugsweise ebenfalls ein bestimmtes, von dem zur Durchführung der eigentlichen Messung von dem Signalinterpreter 18 unterscheidbares Signal durch den Signalgenerator 2 erzeugt. Solange der Signalinterpreter 18 kein solches ein Testzyklus ankündigendes Signal ermittelt, wird dagegen durch den Antwortsignalerzeugungsabschnitt ein standardkonformes Antwortsignal erzeugt und eine Kommunikation des Mobilfunkgeräts 2 im regulären Betrieb ist möglich. Das den Testzyklus startende Signal und das den Testzyklus beendende Signal unterscheiden sich dabei von dem während der eigentlichen Messung gesendeten Signale und sind damit durch den Signalinterpreter 18 erkennbar.

Über eine allgemeine Schnittstelle 27 des Signalgenerators 2 sind beispielsweise verschiedene Vergleichssignale 12.i bzw. Änderungsvorschriften 13.i in dem Speicher 11 abspeicherbar. Alternativ ist es jedoch auch möglich, die Vergleichssignale 12.i bei Beginn eines Testzyklus über die Messeinrichtung 21 zu erzeugen und in dem Speicher 11 abzuspeichern. Hierzu wird ein den Testzyklus startendes Signal an das Mobilfunkgerät 2 gesendet. Die Auswerteinheit 16 des Mobilfunkgeräts 2 ist dann so eingerichtet, dass durch den Signalinterpreter 18 der Start des Testzyklus erkannt wird. Der Antwortsignalerzeugungsabschnitt 19 erzeugt daher zunächst ein einem möglichen ersten Antwortsignal entsprechendes Antwortsignal mit einer charakteristischen Einhüllenden, welches durch die Messvorrichtung 21 in ein Messsignal umgesetzt wird. Dieses Messsignal wird dann durch die Ausleseinheit 23 eingelesen und in dem Speicher 11 als erstes Vergleichssignal 12.1 abgespeichert. Anschließend wird z. B. ein mögliches zweites Antwortsignal mit einer davon abweichenden Einhüllenden durch den Antwortsignalerzeugungsabschnitt 19 erzeugt und als zweites Vergleichssignal 12.2 in dem Speicher 11 abgelegt. Das Erzeugen einer solchen Abfolge von Antwortsignalen als Sequenz von Musterantwortsignalen kann dabei entweder durch einen einzelnen Startbefehl in Form eines bestimmten von dem Signalgenerator 3 gesendeten, durch den Signalinterpreter 18 erkennbaren Signals oder aber jeweils ausgelöst durch unterschiedliche und durch den Signalinterpreter 18 unterscheidbare Signale erzeugt werden. Im letzteren Fall wäre die Steuerungsmöglichkeit des Ablaufs stark verbessert, allerdings ist dann eine erhöhte Funktionalität des Signalinterpreters 18 erforderlich.

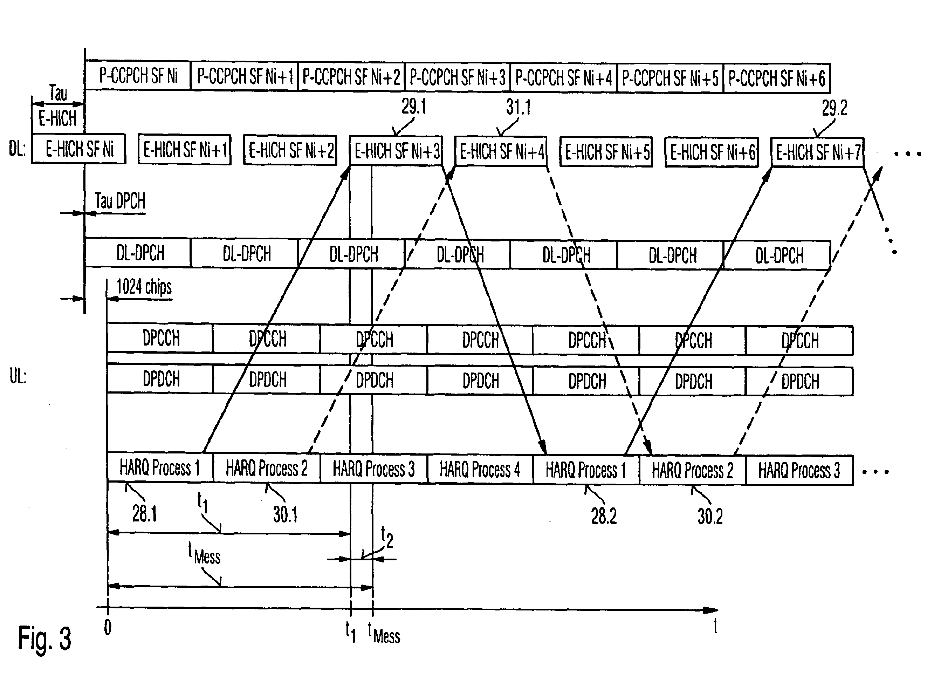

In der Fig. 3 ist zum besseren Verständnis noch einmal der zeitliche Ablauf bei sogenannten HARQ-Prozessen dargestellt. Mit dem Bezugszeichen 28.1 ist dort ein erster Hochfrequenzsignalabschnitt eines ersten HARQ-Prozesses bezeichnet. Dieser erste Hochfrequenzsignalabschnitt basiert auf einem ersten Datensatz, der im Uplink beispielsweise an eine zu testende Basisstation 1 übermittelt wird. Zur Verdeutlichung, dass das erfindungsgemäße Verfahren nicht nur zum Testen von Mobilfunkgeräten 2, sondern auch zum Testen von Basisstationen 1 eingesetzt werden kann, bezieht sich das Beispiel im Gegensatz zu der Fig. 2 nun auf die Übermittlung von Daten an eine Basisstation 1. Die Basisstation 1 weist zumindest dieselben Komponenten auf wie sie für das Mobilfunkgerät 2 bereits erläutert wurden. Es wird also der empfangene erste Hochfrequenzsignalabschnitt 28.1 ausgewertet und ein Antwortsignal zurückgesendet. Dieses Antwortsignal ist als Downlink-Signal-Abschnitt 29.1 dargestellt. Der durch den Mobilfunkstandard festgelegte Zeitversatz t₁ zwischen dem Hochfrequenzsignalabschnitt 28.1 und dem hierzu korrespondierenden Antwortsignal 29.1 wird durch die zeitliche Steuerung der Ausleseeinheit 23 durch den Steuerungsabschnitt 24 berücksichtigt. Vorzugsweise wird ferner eine einstellbare Verzögerung t₂ verwendet, um den tatsächlichen Auslesezeitpunkt bei der Durchführung der Messung steuern zu können. So kann durch die Summe der Zeiten t₁+t₂ der zeitliche Abstand t_{Mess}, mit dem die Leistung des Antwortsignals 29.1 gemessen wird, eingestellt werden.

In dem dargestellten Ausführungsbeispiel sind vier nebenläufige HARQ-Prozesse vorgesehen. Im Anschluss an den ersten Hochfrequenzsignalabschnitt 28.1 wird im Uplink an die Basisstation 2 ein zweiter Hochfrequenzsignalabschnitt 30.1 gesendet. Nach dem Senden zweier weiterer Hochfrequenzsignalabschnitte wird entsprechend derjenigen Änderungsvorschrift, die nach Auswerten des Antwortsignals 29.1 ermittelt wurde, in dem weiteren zu dem ersten HARQ-Prozess gehörenden Hochfrequenzsignalabschnitt 28.2 beim Erkennen eines negativen Bestätigungssignals "NACK" entweder ein identischer Datensatz oder aber ein redundanter Datensatz durch den Signalgenerator 3 gesendet. Wird ein positives Bestätigungssignal "ACK" zurückgesendet, so wird ein neuer Datensatz gesendet.

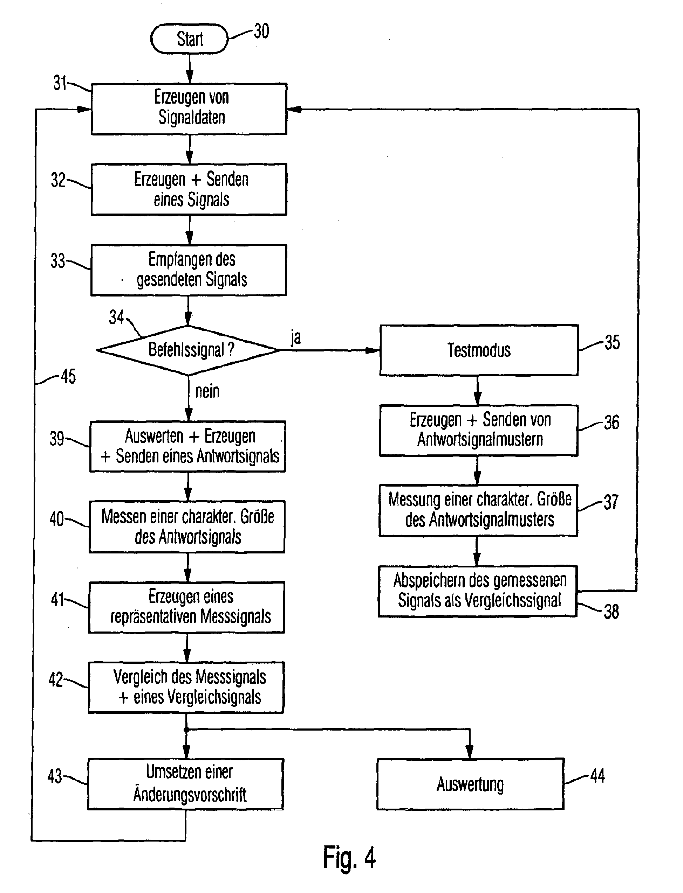

Der Ablauf des erfindungsgemäßen Verfahrens mit einem aus einem zu testenden Gerät und dem Signalgenerator 3 bestehenden Messsystems ist noch einmal schematisch in der Fig. 4 dargestellt. Zunächst wird die Messung gestartet (30). Durch den Signalgenerator 3 werden daraufhin Signaldaten erzeugt (31). Diese Signaldaten beinhalten beispielsweise einen Startbefehl, der durch den Signalinterpreter 18 erkannt wird, zum Durchführen des eigentlichen Testzyklus. Aus den Signaldaten, die entweder in dem Signalerzeugungsabschnitt 7 generiert oder aber von ihm aus dem Speicher 11 ausgelesen werden, wird ein Signal erzeugt und anschließend über die zweite Antenne 6 gesendet (32).

Das Signal wird durch das zu testende Gerät, im dargestellten Beispiel also das Mobilfunkgerät 2, empfangen (33). Bei jedem empfangenen Signal wird zunächst durch den Signalinterpreter 18 analysiert, ob ein Befehlssignal vorliegt (34). Bei Erkennen eines Befehlsignals "Start" durch den Signalinterpreter 18 wird die Signalverarbeitungseinheit 16 in den Testmodus umgeschaltet. In dem Testmodus wird durch den Antwortsignalerzeugungsabschnitt 19 als Antwortsignal ein Signal mit bezüglich der darin enthaltenen Information charakteristischer Einhüllenden erzeugt (35). Nach dem Umschalten in den Testmodus werden zunächst durch den Antwortsignalerzeugungsabschnitt 19 ein oder mehrere Antwortsignalmuster erzeugt und über die erste Antenne 5 nacheinander gesendet. Die zeitliche Abfolge wird durch die gemäß Standard der zu messenden Mobilfunkverbindung festgelegte Zeitspanne t₁ vorgegeben. So getriggert können die möglichen Antwortsignale in Vergleichsignale umgesetzt und abgespeichert werden.

Das von der ersten Antenne 5 bzw. dem Mobilfunkgerät 2 gesendete Antwortsignal wird durch die Messvorrichtung 21 gemessen (37) und das ermittelte Messsignal dem Signalgenerator 3 zugeführt. Die Messsignale, die den Antwortsignalmustern entsprechen, werden in dem Signalgenerator 3 in dem Speicher 11 abgelegt (38). Nach dem Abspeichern der den Antwortsignalmustern entsprechenden Messsignale als Vergleichssignale 12.i in dem Speicher 11 werden die zur eigentlichen Messung verwendeten Signaldaten in dem Signalerzeugungsabschnitt 16 Schritt 31 erzeugt. Diese Signaldaten sind nunmehr jedoch die zur eigentlichen Messung verwendeten Signaldaten, z.B. vordefinierte Nutzdaten. Dementsprechend wird nach dem Empfang des durch den Signalgenerator 3 gesendeten Signals kein Befehl erkannt und das empfangene Signal wird durch die Auswerteeinheit 17 des Mobilfunkgeräts 2 ausgewertet. In Abhängigkeit von einer korrekten oder fehlerhaften Auswertung wird ein entsprechendes Antwortsignal ("ACK" oder "NACK") erzeugt und als Antwortsignal zurückgesendet. Da zuvor die Signalverarbeitungseinheit 16 in den Testmodus gebracht wurde, wird für ein positives Bestätigungssignal "ACK" ein Antwortsignal erzeugt, dessen Einhüllende sich charakteristisch von einer Einhüllenden eines für ein negatives Antwortsignal "NACK" erzeugten Antwortsignals unterscheidet. Durch die Messvorrichtung 21 wird die charakteristische Größe in Form der Einhüllenden des Antwortsignals abgetastet und ein entsprechendes Messsignals ermittelt. Das Messsignal wird dem Eingangsanschluss 22 des Signalgenerators 3 zugeführt (40, 41).

Das erhaltene Messsignal wird mit den Vergleichssignalen 12.i auf Übereinstimmung mittels des Korrelators 25 überprüft (42). Anschließend wird bei einer gefundenen Übereinstimmung zwischen einem Vergleichssignal und dem Messsignal die dem Vergleichssignal 12.i zugeordnete Änderungsvorschrift 13.i ermittelt und durch entsprechende Ansteuerung des Signalerzeugungsabschnitts bzw. des Sendeabschnitts 7, 10 durch den Steuerungsabschnitt 24 umgesetzt. Die ermittelten Übereinstimmungen werden zusätzlich dem Analyseabschnitt 26 übermittelt. In dem Analyseabschnitt 26 wird eine Auswertung 44 der zurückgesendeten Antwortsignale durchgeführt.

In einer Messung wird nach Umsetzen der Änderungsvorschrift (43) wieder ein Signal an das Mobilfunkgerät 2 gesendet und dessen Reaktion ermittelt. Das mehrfache Durchlaufen der entsprechenden Verfahrenschritte ist in der Fig. 4 mit dem Pfeil 45 angegeben. Eine Testschleife kann z.B. eine feste Anzahl von Durchläufen der Schritte 31-34 und 39-44 umfassen.

Die Erfindung ist nicht auf das dargestellte Ausführungsbeispiel beschränkt. Insbesondere können auch einzelne Funktionen und einzelne Verfahrensschritte des Ausführungsbeispiels vorteilhaft miteinander kombiniert werden. Dabei ist es auch möglich, dass anstelle der für das Beispiel gewählten einfachen Überprüfung der korrekten Auswertung und des Zurücksendens von positiven und negativen Bestätigungssignale andere, durch eine charakteristische Einhüllende unterscheidbare Antwortsignale erzeugt werden.

## Patentansprüche

1. Verfahren zum Testen von Geräten von Mobilfunksystemen mit folgenden Verfahrensschritten:
- Erzeugen von Signaldaten (31)
- Erzeugen eines Signals (32) aus den Signaldaten durch einen Signalgenerator (3)
- Senden des Signals (32) an ein zu testendes Gerät (2)
- Empfangen des Signals (33) durch ein zu testendes Gerät (2)
- Auswerten des empfangenen Signals und Erzeugen und Senden eines Antwortsignals (39), wobei das Antwortsignal eine für die zurückzusendende Information charakteristischen Verlauf der Einhüllenden aufweist,
- Erzeugen eines den Verlauf der Einhüllenden repräsentierenden Messsignals,
- Verarbeitung des Messsignals durch den Signalgenerator, ohne eine standardkonforme Demodulation,
- Vergleichen des den Verlauf der Einhüllenden repräsentieren Messsignals durch den Signalgenerator, mit zumindest einem Vergleichssignal,
- Zuordnen des Messsignals zu einer eindeutig zugeordneten Änderungsvorschrift,
- Einlesen der Änderungsvorschrift, und
- Erzeugen und/oder Senden von Folgesignalen in Abhängigkeit von der Auswertung der Änderungsvorschrift.

2. Verfahren nach Anspruch 1,
**dadurch gekennzeichnet,**
**dass** bei Übereinstimmung des Messsignals mit einem Vergleichssignal (12.i) für nachfolgend zu sendende Signale die Erzeugung und/oder das Senden des Signals unter Berücksichtigung der Änderungsvorschrift erfolgt.

3. Verfahren nach Anspruch 1 oder 2,
**dadurch gekennzeichnet,**
**dass** die möglichen Vergleichssignale (12.i) in einem Speicher (11) des Signalgenerators (3) abgespeichert werden.

4. Verfahren nach Anspruch 3,
**dadurch gekennzeichnet,**
**dass** ein jeweils ein einem Vergleichssignal (12.i) entsprechendes Antwortsignal durch das zu testende Gerät (2) erzeugt wird und das aus dem Antwortsignal durch Messen des Leistungsverlaufs erzeugte repräsentierende Messsignal als Vergleichssignal (12.i) abgespeichert wird.

5. Verfahren nach einem der Ansprüche 1 bis 4,
**dadurch gekennzeichnet,**
**dass** zum Erzeugen des Messsignals (41) eine mit dem Signalgenerator (3) verbundene Messvorrichtung (21) zeitlich gesteuert durch den Signalgenerator (3) ausgelesen wird.

6. Verfahren nach einem der Ansprüche 1 bis 5,
**dadurch gekennzeichnet,**
**dass** zum Vergleich (42) des Messsignals mit dem zumindest einen Vergleichssignal (12.i) eine Mustererkennung durchgeführt wird.

7. Verfahren nach einem der Ansprüche 1 bis 6,
**dadurch gekennzeichnet,**
**dass** zum Starten einer Messung an das zu testende Gerät (2) ein bestimmtes, einen Testzyklus einleitendes Signal gesendet wird.

8. Verfahren nach einem der Ansprüche 1 bis 7,
**dadurch gekennzeichnet,**
**dass** das zu testende Gerät (2) in einem Testzyklus ein nicht standardkonformes Antwortsignal mit einer charakteristischen Einhüllenden erzeugt, wenn ein zum Senden von Signalen von dem Signalgenerator (3) zu dem zu testenden Gerät (2) verwendeter Mobilfunkstandard ein Antwortsignal mit einer konstanten Einhüllenden oder nicht hinreichend charakteristischen Einhüllenden vorsieht.

9. Signalgenerator mit einem Signalerzeugungsabschnitt (7) zum Erzeugen eines Signals, einem Sendeabschnitt (10) zum Senden des Signals und einem Steuerungsabschnitt (24) zum Ansteuern des Signalerzeugungsabschnitts (7) und/oder des Sendeabschnitts (10),
**dadurch gekennzeichnet,**
**dass** der Signalgenerator (3) einen Korrelator (23) aufweist, wobei dem Korrelator (23) zumindest ein Vergleichssignal (12.i) und ein Messsignal zum Vergleich des einen Verlauf einer Einhüllenden repräsentierenden Messsignals mit dem zumindest einen Vergleichssignal (12.i) zuführbar sind, wobei zumindest ein Vergleichssignal (12.i) und eine diesem Vergleichssignal (12.i) zugeordnete Änderungsvorschrift (13.i) in einem Speicher (11) des Signalgenerators (3) abgespeichert sind und der Steuerungsabschnitt (24) so eingerichtet ist, dass bei Übereinstimmung des Messsignals mit einem Vergleichssignal (12.i) der Signalerzeugungsabschnitt (7) und/oder der Sendeabschnitt (10) der Änderungsvorschrift (13.i) entsprechend angesteuert wird, wobei der Signalerzeugungsabschnitt (7) entsprechend der Änderungsvorschrift (13.i) Folgesignale erzeugt und diese von dem Sendeabschnitt (10) gesendet werden.

10. Signalgenerator nach Anspruch 9,
**dadurch gekennzeichnet,**
**dass** als Vergleichssignal (12.i) ein einem Eingangsanschluss (22) des Signalgenerator (3) zugeführtes Messsignal abspeicherbar ist.

11. Signalgenerator nach einem der Ansprüche 9 bis 10,
**dadurch gekennzeichnet,**
**dass** ein dem Eingangsanschluss (22) zugeführtes Messsignal zeitlich gesteuert durch den Steuerungsabschnitt (24) einlesbar ist.

12. Signalgenerator nach einem der Ansprüche 9 bis 11,
**dadurch gekennzeichnet,**
**dass** durch den Signalerzeugungsabschnitt (7) zumindest ein erstes Signal und ein sich hiervon unterscheidendes zweites Signal erzeugbar ist.

13. Gerät für ein Mobilfunksystem mit einem Sendemodul (20) und einem Empfangsmodul (15) zum Empfangen eines Messsignals und einer mit dem Sendemodul (20) und dem Empfangsmodul (15) verbundenen Signalverarbeitungseinheit (16),
**dadurch gekennzeichnet,**
**dass** die Signalverarbeitungseinheit (16) eine Auswerteeinheit (17) aufweist, in der das empfangene Messsignal ausgewertet wird, wobei in Abhängigkeit von dem Ergebnis der Auswertung ein Antwortsignalerzeugungsabschnitt (19) der Signalverarbeitungseinheit (16) ein Antwortsignal erzeugt, wobei der Antwortsignalerzeugungsabschnitt (19) so eingerichtet ist, dass das von dem Gerät (2) gesendete Antwortsignal eine standardkonforme Einhüllende oder, standardunabhängig, einen zur Übermittlung einer Information charakteristischen Verlauf der Einhüllenden aufweist.

14. Gerät nach Anspruch 13,
**dadurch gekennzeichnet,**
**dass** die Signalverarbeitungseinheit (16) einen Signalinterpreter (18) aufweist.

15. Gerät nach Anspruch 14,
**dadurch gekennzeichnet,**
**dass** der Signalinterpreter (18) mit dem Antwortsignalerzeugungsabschnitt (19) verbunden ist und der Antwortsignalerzeugungsabschnitt (19) so eingerichtet ist, dass er bei einem von dem Signalinterpreter (18) übermittelten Steuersignal ein Signal mit einer charakteristischen Einhüllenden erzeugt.

16. Messsystem zum Testen von Geräten für Mobilfunksysteme umfassend einen Signalgenerator (3)gemäß einem der Ansprüche 9 - 12, einem zu testenden Gerät (2) gemäß einem der Ansprüche 13 - 15 und einer Messvorrichtung (21) zum Erzeugen eines Messsignals, wobei der Korrelator (23) im Signalgenerator (3)zum Vergleichen des Messsignals mit einem Vergleichssignal (12.i) bereitgestellt ist.

## Claims

1. Method for testing devices of mobile radio systems, having the following method steps:
- production of signal data (31),
- production of a signal (32) from the signal data by a signal generator (3),
- sending of the signal (32) to a device (2) that is to be tested,
- reception of the signal (33) by a device (2) that is to be tested,
- evaluation of the received signal and production and sending of a response signal (39), wherein the response signal has an envelope profile that is characteristic of the information that is to be returned,
- production of a measurement signal that represents the profile of the envelope,
- processing of the measurement signal by the signal generator, without standard-compliant demodulation,
- comparison of the measurement signal representing the profile of the envelope with at least one comparison signal by the signal generator,
- association of the measurement signal with an explicitly associated change specification,
- reading-in of the change specification, and
- production and/or sending of following signals on the basis of the evaluation of the change specification.

2. Method according to Claim 1,
**characterized**
**in that** in the event of a match between the measurement signal and a comparison signal (12.i) the production and/or the sending of the signal for signals that are subsequently to be sent are effected taking account of the change specification.

3. Method according to Claim 1 or 2,
**characterized**
**in that** the possible comparison signals (12.i) are stored in the memory (11) of the signal generator (3).

4. Method according to Claim 3,
**characterized**
**in that** a respective response signal corresponding to a comparison signal (12.i) is produced by the device (2) that is to be tested and the representative measurement signal produced from the response signal by measuring the power profile is stored as a comparison signal (12.i).

5. Method according to one of Claims 1 to 4,
**characterized**
**in that** for the purpose of producing the measurement signal (41) a measurement apparatus (21) connected to the signal generator (3) is read out under time control by the signal generator (3).

6. Method according to one of Claims 1 to 5,
**characterized**
**in that** for the purpose of comparing (42) the measurement signal with the at least one comparison signal (12.i) pattern recognition is performed.

7. Method according to one of Claims 1 to 6,
**characterized**
**in that** for the purpose of starting a measurement a particular signal initiating a test cycle is sent to the device (2) that is to be tested.

8. Method according to one of Claims 1 to 7,
**characterized**
**in that** the device (2) that is to be tested uses a test cycle to produce a non-standard-compliant response signal with a characteristic envelope when a mobile radio standard used for sending signals from the signal generator (3) to the device (2) that is to be tested provides a response signal having a constant envelope or insufficiently characteristic envelope.

9. Signal generator having a signal production section (7) for producing a signal, a transmission section (10) for sending the signal and a control section (24) for actuating the signal production section (7) and/or the transmission section (10),
**characterized**
**in that** the signal generator (3) has a correlator (23), wherein the correlator (23) can be supplied with at least one comparison signal (12.i) and a measurement signal for comparing the measurement signal representing a profile of an envelope with the at least one comparison signal (12.i), wherein at least one comparison signal (12.i) and a change specification (13.i) associated with said comparison signal (12.i) are stored in the memory (11) of the signal generator (3) and the control section (24) is set up such that in the event of a match between the measurement signal and a comparison signal (12.i) the signal production section (7) and/or the transmission section (10) is/are actuated in accordance with the change specification (13.i), wherein the signal production section (7) produces following signals in accordance with the change specification (13.i) and said following signals are sent by the transmission section (10).

10. Signal generator according to Claim 9,
**characterized**
**in that** the comparison signal (12.i) that can be stored is a measurement signal supplied to an input connection (22) of the signal generator (3).

11. Signal generator according to either of Claims 9 and 10,
**characterized**
**in that** a measurement signal supplied to the input connection (22) can be read in under time control by the control section (24).

12. Signal generator according to one of Claims 9 to 11,
**characterized**
**in that** the signal production section (7) can produce at least a first signal and a second signal that is distinguished therefrom.

13. Device for a mobile radio system having a transmission module (20) and a reception module (15) for receiving a measurement signal and a signal processing unit (16) that is connected to the transmission module (20) and the reception module (15),
**characterized**
**in that** the signal processing unit (16) has an evaluation unit (17) in which the received measurement signal is evaluated, wherein the result of the evaluation is taken as a basis for a response signal production section (19) of the signal processing unit (16) to produce a response signal, wherein the response signal production section (19) is set up such that the response signal sent by the device (2) has a standard-compliant envelope or, independently of standard, an envelope profile that is characteristic of the transmission of a piece of information.

14. Device according to Claim 13,
**characterized**
**in that** the signal processing unit (16) has a signal interpreter (18).

15. Device according to Claim 14,
**characterized**
**in that** the signal interpreter (18) is connected to the response signal production section (19), and the response signal production section (19) is set up such that it produces a signal having a characteristic envelope when a control signal is transmitted by the signal interpreter (18).

16. Measurement system for testing devices for mobile radio systems comprising a signal generator (3) according to one of Claims 9-12, a device (2) that is to be tested according to one of Claims 13-15 and a measurement apparatus (21) for producing a measurement signal, wherein the correlator (23) in the signal generator (3) is provided for the purpose of comparing the measurement signal with a comparison signal (12.i).

## Revendications

1. Procédé pour tester des appareils de systèmes de téléphonie mobile comportant les étapes de procédé suivantes:
- la génération de données de signaux (31)
- la génération de signaux (32) à partir de données de signaux par l'intermédiaire d'un générateur de signaux (3)
- l'envoi du signal (32) à un appareil à tester (2)
- la réception du signal (33) par l'intermédiaire de l'appareil à tester (2)
- l'évaluation du signal reçu et la génération et l'envoi d'un signal de réponse (39), dans lequel le signal de réponse présente un tracé de l'enveloppe caractéristique pour l'information à renvoyer,
- la génération d'un signal de mesure représentant le tracé de l'enveloppe,
- le traitement du signal de mesure par l'intermédiaire du générateur de signaux, sans démodulation standard,
- la comparaison du signal de mesure représentant le tracé de l'enveloppe par l'intermédiaire du générateur de signaux, à au moins un signal de comparaison,
- l'association du signal de mesure à une règle de modification clairement associée,
- la lecture de la règle de modification, et
- la génération et/ou l'envoi de signaux de séquence conformément à l'évaluation de la règle de modification.

2. Procédé selon la revendication 1, **caractérisé en ce que**
en cas de concordance du signal de mesure avec un signal de comparaison (12.i) pour des signaux à envoyer ensuite, la génération et/ou l'envoi du signal se produit en tenant compte de la règle de modification.

3. Procédé selon la revendication 1 ou 2, **caractérisé en ce que**
les signaux de comparaison possibles (12.i) sont mémorisés dans une mémoire (11) du générateur de signaux (3).

4. Procédé selon la revendication 3, **caractérisé en ce que**
un signal de réponse respectif correspondant à un signal de comparaison (12.i) est généré par l'appareil à tester (2) et le signal de mesure représentatif généré à partir du signal de réponse par la mesure du tracé de puissance est mémorisé en tant que signal de comparaison (12.i).

5. Procédé selon l'une des revendications 1 à 4, **caractérisé en ce que**
un procédé de mesure (21) relié au générateur de signaux (3) commandé temporellement par le générateur de signaux (3) est extrait en vue de la génération du signal de mesure (41).

6. Procédé selon l'une des revendications 1 à 5, **caractérisé en ce que**
une reconnaissance de forme est effectuée en vue de la comparaison (42) du signal de mesure avec au moins un signal de comparaison (12.i).

7. Procédé selon l'une des revendications 1 à 6, **caractérisé en ce que**
un signal déterminé initiant un cycle de test est envoyé pour commencer une mesure à l'appareil à tester (2).

8. Procédé selon l'une des revendications 1 à 7, **caractérisé en ce que**
l'appareil à tester (2) génère un signal de réponse non standard avec une enveloppe caractéristique dans un cycle de test, si un standard de téléphonie mobile utilisé pour envoyer des signaux depuis le générateur de signaux (3) vers l'appareil à tester (2) prévoit un signal de réponse avec une enveloppe constante ou une enveloppe insuffisamment caractéristique.

9. Générateur de signaux comportant un segment de génération de signaux (7) pour générer un signal, un segment d'envoi (10) pour envoyer le signal et un segment de commande (24) pour commander le segment de génération de signaux (7) et/ou le segment d'envoi (10), **caractérisé en ce que**
le générateur de signaux (3) comporte un corrélateur (23), dans lequel au moins un signal de comparaison (12.i) et un signal de mesure peuvent être délivrés au corrélateur (23) en vue de la comparaison du signal de mesure représentant le tracé d'une enveloppe avec au moins un signal de comparaison (12.i), dans lequel au moins un signal de comparaison (12.i) et une règle de modification (13.i) associée à ce signal de comparaison (12.i) sont mémorisés dans une mémoire (11) du générateur de signaux (3) et le segment de commande (24) est agencé de sorte que, en cas de concordance du signal de mesure avec un signal de comparaison (12.i), le segment de génération de signaux (7) et/ou le segment d'envoi (10) est commandé conformément à la règle de modification (13.i), dans lequel le segment de génération de signaux (7) génère des signaux de séquence conformément à la règle de modification (13.i) et ceux-ci sont envoyés par le segment d'envoi (10).

10. Générateur de signaux selon la revendication 9, **caractérisé en ce que**
un signal de mesure délivré à une borne d'entrée (22) du générateur de signaux (3) peut être mémorisé en tant que signal de comparaison (12.i).

11. Générateur de signaux selon l'une des revendications 9 à 10, **caractérisé en ce que**
un signal de mesure délivré à la borne d'entrée (22) commandé temporellement par le segment de commande (24) peut être lu.

12. Générateur de signaux selon l'une des revendications 9 à 11, **caractérisé en ce que**
au moins un premier signal et un second signal se différenciant du premier peuvent être générés par le segment de génération de signaux (7).

13. Appareil pour un système de téléphonie mobile comportant un module d'envoi (20) et un module de réception (15) pour recevoir un signal de mesure et une unité de traitement de signaux (16) reliée au module d'envoi (20) et au module de réception (15), **caractérisé en ce que**
l'unité de traitement de signaux (16) présente une unité d'évaluation (17), dans laquelle le signal de mesure reçu est évalué, où un segment de génération de signaux de réponse (19) de l'unité de traitement de signaux (16) génère un signal de réponse conformément au résultat de l'évaluation, où le segment de génération de signaux de réponse (19) est agencé de sorte que le signal de réponse envoyé par l'appareil (2) présente une enveloppe standard ou, indépendamment du standard, un tracé caractéristique de l'enveloppe en vue de la transmission d'une information.

14. Appareil selon la revendication 13, **caractérisé en ce que**
l'unité de traitement de signaux (16) présente un interpréteur de signal (18).

15. Appareil selon la revendication 14, **caractérisé en ce que**
l'interpréteur de signal (18) est relié au segment de génération de signaux de réponse (19) et le segment de génération de signaux de réponse (19) est agencé de sorte qu'il génère, dans le cas du signal de commande transmis par l'interpréteur de signal (18), un signal comportant une enveloppe caractéristique.

16. Système de mesure en vue de tester des appareils pour des systèmes de téléphonie mobile comportant un générateur de signaux (3) conformément à l'une des revendications 9-12, un appareil à tester (2) conformément à l'une des revendications 13-15 et un dispositif de mesure (21) pour générer un signal de mesure, dans lequel le corrélateur (23) dans le générateur de signaux (3) est prévu pour comparer le signal de mesure à un signal de comparaison (12.i).
